# EUROPÄISCHE PATENTSCHRIFT

(11) **EP 2 060 415 B1**
(45) Veröffentlichungstag und Bekanntmachung des Hinweises auf die Patenterteilung: **15.06.2011**
(21) Anmeldenummer: 07022288.0
(22) Anmeldetag: 16.11.2007
(51) Int. Cl.: B60D 1/50, B60D 1/14, B60D 1/02

(54) **Vormontierte gefederte Anhängerkupplung**
Premounted spring born trailer tow-bar
Attelage à ressort prémonté

(43) Veröffentlichungstag der Anmeldung: 20.05.2009
(73) Patentinhaber: Jost-Werke GmbH, 63263 Neu-Isenburg (DE)
(72) Erfinder: Szczepanek, Udo, 82223 Eichenau (DE)
(74) Vertreter: Trossin, Hans-Jürgen

(56) Entgegenhaltungen:
- EP-A- 1 785 329
- DE-A1-102004 045 254
- DE-U1-202006 010 793
- GB-A- 467 185
- US-A- 1 819 393

## Beschreibung

Die vorliegende Erfindung betrifft eine Anhängerkupplung zur lösbaren Verbindung eines Zugfahrzeugs mit einem Nachlauffahrzeug gemäß dem Oberbegriff des Anspruchs 1.

Eine gattungsgemäße Anhängerkupplung ist aus der GB 467 185 A bekannt.

Eine weitere Anhängerkupplung mit Zugstangenbefestigung ist aus der DE 10 2004 045 254 A bekannt. Die aus dem genannten Dokument bekannte Anhängerkupplung ist eine Lastkraftwagenkupplung mit verstellbarem Kupplungsbolzen, welcher zur Herstellung einer lösbaren Verbindung zwischen Zugfahrzeug und Nachlauffahrzeug die zentrale Öffnung einer geschlossenen Zugöse durchsetzt. Die vorliegende Anmeldung ist auf diese Art von Anhängerkupplungen selbstverständlich anwendbar, soll jedoch nicht hierauf beschränkt sein, und kann beispielsweise auch Kugelkupplungen betreffen.

Zur Montage der aus der DE 10 2004 045 254 A bekannten Anhängerkupplung ist zunächst das Befestigungslager, welches die mit dem Kupplungsgehäuse verbundene Zugstange aufnehmen soll, an dem Anbringungsbauteil am Fahrzeug zu befestigen. Dann werden auf die Zugstange die kupplungsgehäusenäheren Bauteile, wie beispielsweise Elastomerfedern und Federwiderlager, aufgeschoben und die Zugstange in Abstehrichtung durch das bereits am Fahrzeug befestigte Befestigungslager hindurch gesteckt.

Anschließend werden weitere Bauteile, wie etwa Elastomerfedern und Federwiderlager, auf den freien, kupplungsgehäusefernen Endabschnitt der Zugstange aufgeschoben, so dass die Kupplung beiderseits des Befestigungslagers in Zugstangenlängsrichtung gefedert ist.

In einem nächsten Montageschritt ist dann das Kupplungsgehäuse gegen die vorbereiteten Elastomerfedern vorzuspannen und in dem Vorspannungszustand zu sichern.

Gerade dieser letzte Schritt des Vorspannens des Kupplungsgehäuses gegen das Befestigungslager ist bei dem bereits am Anbringungsbauteil des Fahrzeugs angebrachten Befestigungslager äußerst beschwerlich, da die erforderlichen Bauteile für Werkzeugangriff häufig sehr schwer zugänglich sind und nur sehr wenig Raum zur Werkzeugbetätigung vorhanden ist.

Die aus der GB 467 185 A bekannte gattungsgemäße Anhängerkupplung gestattet dagegen ihre Vormontage außerhalb des Fahrzeugs und den Einbau in das Fahrzeug in einem vormontierten Zustand.

Es ist daher Aufgabe der vorliegenden Erfindung, eine gattungsgemäße Anhängerkupplung gegenüber dem Stand der Technik zu verbessern.

Diese Aufgabe wird erfindungsgemäß gelöst durch eine Anhängerkupplung der eingangs genannten Art, bei welcher die Anhängerkupplung zu ihrer federnden Lagerung außerdem wenigstens eine in Abstehrichtung vor dem Befestigungslager angeordnete zweite Federanordnung umfasst, welche wie die erste Federanordnung axial vorgespannt ist.

Jene Bauteile, welche in einem Längsabschnitt der Zugstange angeordnet sind, der sich ausgehend von der Anlagefläche des Flanschabschnitts in Abstehrichtung bis zum freien, kupplungskörperfernen Längsende der Zugstange erstreckt, sind als "Durchsteck-Bauteile" bezeichnet, da diese Bauteile durch die bezeichnete Montageöffnung im Anbringungsbauteil des Fahrzeugs zur Anbringung des Kupplungskörpers am Fahrzeug in Abstehrichtung hindurch gesteckt werden. Dies ist aufgrund der oben angegebenen Bemessungsvorschrift bei gegenüber dem Stand der Technik im Wesentlichen unveränderter Montageöffnung möglich.

Aufgrund der in dem bezeichneten Längsabschnitt der Zugstange gegebenen Durchsteckbarkeit der Zugstange und der von dieser getragenen Durchsteck-Bauteile ist dieser Längsabschnitt als "Durchsteck-Längsabschnitt" bezeichnet.

Aufgrund der aus dem Stand der Technik bereits bekannten Durchsteckbarkeit kann der Kupplungskörper mit der von ihm abstehenden Zugstange zusammen mit dem Befestigungslager und ggf. weiteren von der Zugstange aufgenommenen Bauteilen als vormontierte Baugruppe zur Montage des Kupplungskörpers an das Fahrzeug bereitgestellt werden. Die Montage aller für die Anbringung des Kupplungskörpers am Fahrzeug notwendigen Bauteile kann bequem an geeigneter Stelle abseits des Fahrzeugs geschehen. Für die Anbringung des Kupplungskörpers am Fahrzeug selbst reicht es aus, die vormontierte Einheit aus Kupplungskörper, Zugstange und Befestigungslager in Abstehrichtung durch die Montageöffnung des Anbringungsbauteils hindurch zu stecken, bis die Anlagefläche des Befestigungslagers an der Gegenanlagefläche des Anbringungsbauteils anliegt. Dann braucht der Flanschabschnitt lediglich mit dem Anbringungsbauteil in an sich bekannter Weise verbunden zu werden, um den Kupplungskörper am Fahrzeug anzubringen.

Als weitere Montageerleichterung kann daran gedacht sein, dass die Durchsteck-Bauteile im Wesentlichen eine kreisrunde Außengeometrie aufweisen und die Montageöffnung im Wesentlichen ebenfalls kreisrund ist, so dass der Außendurchmesser der Durchsteck-Bauteile kleiner ist als der Öffnungsdurchmesser der Montageöffnung.

Grundsätzlich soll jedoch nicht ausgeschlossen sein, dass die Montageöffnung zumindest teilweise durch einen Polygonzug begrenzt ist oder/und wenigstens ein Durchsteck-Bauteil - bei Betrachtung im Querschnitt - eine wenigstens zum Teil durch einen Polygonzug begrenzte Außengeometrie aufweist.

Da bei der aus der DE 10 2004 045 254 A bekannten Anhängerkupplung des Standes der Technik das Befestigungslager entgegen der Abstehrichtung, d.h. bezogen auf das Fahrzeug in der Regel entgegen der Fahrtrichtung, in die Montageöffnung des Anbringungsbauteils eingesteckt wird, wohingegen die Zugstange während des Montagevorgangs üblicherweise in Abstehrichtung durch das Befestigungslager hindurchgeführt wird, sind die genannten Montageschritte zwingend gesondert voneinander auszuführen. Demgegenüber ist die Montage einer erfindungsgemäßen Anhängerkupplung auch dadurch erleichtert, dass die Anlagefläche des Befestigungslagers, wie aus der GB 467 185 A bekannt, im montierten Zustand der Anhängerkupplung in Abstehrichtung weist. Somit kann die vormontierte Baugruppe mit Kupplungskörper, Zugstange und Befestigungslager in Abstehrichtung in die Montageöffnung eingeführt werden, bis Anlagefläche und Gegenanlagefläche aneinander anliegen und dann an dem Anbringungsbauteil festgelegt werden.

Zur Erhöhung der Standfestigkeit der Kupplung ist vorgesehen, dass die Zugstange an dem von ihr durchsetzten

Befestigungslager unter Federvorspannung festgelegt ist, welche bewirkt wird durch wenigstens eine in Abstehrichtung hinter dem Befestigungslager angeordnete erste Federanordnung, wobei die erste Federanordnung durch ein Axialvorspannmittel axial vorgespannt ist. Die erste Federanordnung und das Axialvorspannmittel sind dabei Durchsteck-Bauteile. Dadurch kann nämlich der Kupplungskörper mit der Zugstange federnd an dem Befestigungslager festgelegt sein.

Als mögliche Federmittel haben sich bei Anhängerkupplungen der hier bezeichneten Art Polymerfederelemente bewährt, so dass die erste Federanordnung wenigstens ein die Zugstange umgebendes Polymerfederelement, vorzugsweise einen Polymerring, umfasst.

Um bei einer vorgegebenen gewünschten Federcharakteristik, d.h. bei einer vorgegebenen Zuordnung von Federbelastung und Federweg, die Außengeometrie der ersten Federanordnung mit möglichst geringer radialer Abmessung bezogen auf die Zugstangenlängsachse auszubilden, kann vorgesehen sein, dass die Anhängerkupplung wenigstens zwei Polymerfederelemente umfasst und in Abstehrichtung zwischen zwei axial benachbarten Polymerfederelementen eine im Verhältnis zu diesen im Wesentlichen starre Zwischenscheibe als weiteres Durchsteck-Bauteil angeordnet ist. Es hat sich nämlich gezeigt, dass durch zwei in axialer Richtung benachbarte Polymerfederelemente mit einer axial zwischen sich aufgenommenen im Wesentlichen starren Zwischenscheibe eine im Wesentlichen gleiche Federcharakteristik erhalten werden kann, wie bei einem einzigen Polymerfederelement, welches jedoch eine wesentlich größere radiale Abmessung aufweist. Durch die reduzierte radiale Abmessung der ersten Federanordnung kann diese als Durchsteck-Bauteil durch die Montageöffnung hindurch geführt werden, ohne dass die Montageöffnung hierzu gegenüber dem Stand der Technik vergrößert werden müsste.

Zur Einsparung weiterer Montageschritte kann vorgesehen sein, dass wenigstens ein Polymerfederelement an die Zwischenscheibe anvulkanisiert ist. Dann, wenn zwei Polymerfederelemente vorgesehen sind, sind vorzugsweise beide Polymerfederelemente an die Zwischenscheibe anvulkanisiert, und zwar auf jeder Stirnfläche der Zwischenscheibe ein Polymerfederelement. Dadurch können die Polymerfederelemente mit der Zwischenscheibe als vorgefertigte Baugruppe auf den Durchsteck-Längsabschnitt der Zugstange aufgeschoben werden.

Alternativ hierzu kann die erste Federanordnung auch derart ausgestaltet sein, dass sie ein Polymerfederelement umfasst, welches die Zwischenscheibe an wenigstens drei Seiten umgibt. Dabei ist es vorteilhaft, wenn die Zwischenscheibe an den wenigstens drei Seiten von Polymermaterial umspritzt ist bzw. das Polymermaterial an den wenigstens drei Seiten der Zwischenscheibe anvulkanisiert ist. Auch hierdurch ergibt sich eine erste Federanordnung mit geringen möglichen radialen Abmessungen, welche die Durchsteckbarkeit durch eine im Stand der Technik übliche Montageöffnung gewährleisten, und mit einer gleichzeitig zur Verwendung als Feder zur Lagerung einer Anhängerkupplung tauglichen Federcharakteristik.

Zum Schutz der die erste Federanordnung durchsetzenden Zugstange vor Abrieb durch Kontakt mit der im Wesentlichen starren Zwischenscheibe kann vorgesehen sein, dass das Polymerfederelement die Zwischenscheibe in deren in axialer Richtung weisenden Stirnflächen sowie an der radial inneren Mantelfläche berührt.

Die Federcharakteristik der ersten Federanordnung kann noch dadurch positiv beeinflusst werden, dass die Zwischenscheibe radial weiter außen eine größere axiale Dicke aufweist als radial weiter innen. Hierdurch kann bei gleichzeitig möglichst geringer radialer Außenabmessung der ersten Federanordnung eine zur Verwendung als Federelement zur Lagerung einer Anhängerkupplung erforderliche Federcharakteristik erhalten werden.

Beispielsweise kann hierzu die Zwischenscheibe rotationssymmetrisch sein und weiter derart ausgestaltet sein, dass sie in einem Schnitt mit einer ihre Rotationssymmetrieachse enthaltenden Schnittebene einen T-förmigen Querschnitt aufweist. Da bei einem scharfkantigen T-Querschnitt die vorhandenen umlaufenden Kanten eine ungünstige Wirkung auf das an sie anliegende Polymerfederelement haben können, kann gemäß einer Weiterbildung der vorliegenden Erfindung vorgesehen sein, dass die Kontur wenigstens einer in axialer Richtung weisenden Stirnfläche der Zwischenscheibe bei Betrachtung in dem besagten Schnitt eine stetigen Verlauf hat.

Aus Gründen eines erwünschten möglichst symmetrischen Federverhaltens unter Belastung ist bevorzugt, dass die erste und die zweite Federanordnung jeweils eine Federcharakteristik-aufweisen, die sich um nicht mehr als 20%, vorzugsweise um nicht mehr als 10% unterscheiden, besonders bevorzugt im Wesentlichen identisch sind.

Um die Anzahl an benötigten Bauteilen möglichst gering zu halten, kann die zweite Federanordnung genau ein Polymerfederelement aufweisen. Da die zweite Federanordnung in Abstehrichtung vor dem Befestigungslager verbleibt, kommt es bei dieser auf die radiale Abmessung nicht an. Deshalb kann die zweite Federanordnung eine radial größere Abmessung aufweisen als die erste Federanordnung, da für die zweite Federanordnung eine Durchsteckbarkeit durch die Montageöffnung nicht erforderlich ist.

Eine weitere erwünschte Reduzierung an erforderlichen Bauteilen kann man dadurch erhalten, dass man Flächen des Befestigungslagers als Federwiderlager für die oben genannten Federanordnungen nutzt. Insbesondere kann vorgesehen sein, dass eine in Abstehrichtung weisende Fläche des Befestigungslagers als Federwiderlager für die erste Federanordnung ausgebildet ist. Ebenso kann daran gedacht sein, dass eine entgegen der Abstehrichtung weisende Fläche des Befestigungslagers als Federwiderlager für die zweite Federanordnung ausgebildet ist.

Die Federwiderlager sind dabei aus den oben genannten Gründen vorzugsweise ähnlich konturiert, wie eine in axiale Richtung weisende Fläche der Zwischenscheibe, d.h. die Federwiderlager am Befestigungslager stehen radial weiter außen in axialer Richtung weiter vor als radial weiter innen, so dass ein am Federwiderlager des Befestigungslagers anliegendes Polymerfederelement radial außen stärker zusammengedrückt wird als weiter radial innen.

Je nach konkreter Ausgestaltung der Anhängerkupplung kann der Kupplungskörper eine Kupplungskugel mit Tragstange oder einen Zugösenaufnahmeraum mit verlagerbarem Kupplungsbolzen umfassen.

Die vorliegende Erfindung wird im Folgenden anhand der beiliegenden Figuren näher erläutert. Es stellt dar:
- Fig. 1: eine Draufsicht einer ersten Ausführungsform eines Kupplungskörpers einer erfindungsgemäßen Anhängerkupplung,
- Fig. 2: der am Fahrzeug angebrachte Kupplungskörper von Fig. 1 im Längs- schnitt,
- Fig. 3: eine zweite Ausführungsform eines Kupplungskörpers einer erfindungsgemäßen Ausführungsform und
- Fig. 4: eine dritte Ausführungsform einer erfindungsgemäßen Anhänger- kupplung.

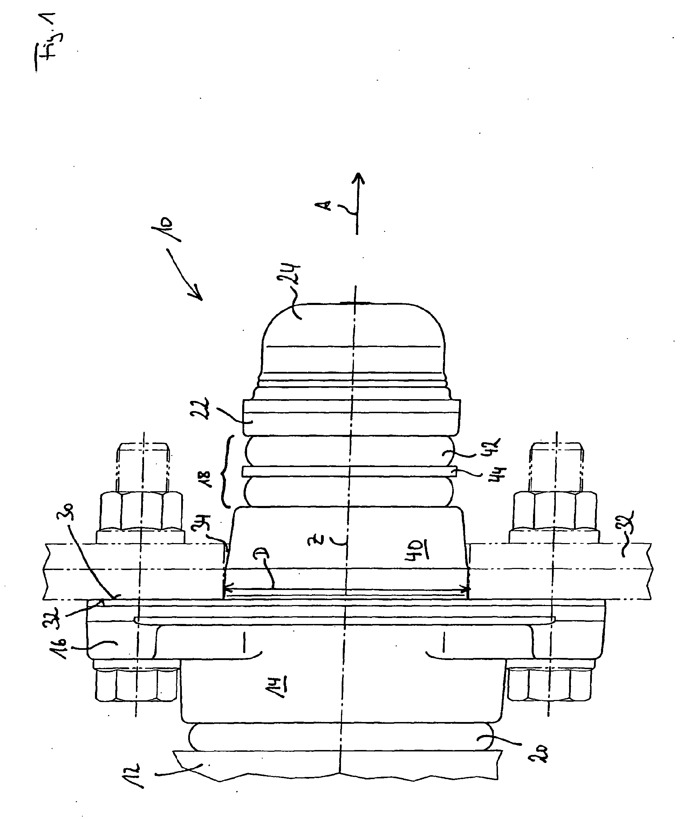

In Fig. 1 ist ein zugfahrzeugseitiges Bauteil 10 einer erfindungsgemäßen Anhängerkupplung dargestellt, welches einen in an sich bekannter Weise aufgebauten Kupplungskörper 12, ein Befestigungslager 14 mit einem Flanschabschnitt 16, eine erste Federanordnung 18, eine zweite Federanordnung 20, eine Spannscheibe 22 sowie eine in Fig. 1 nicht zu erkennende, da unter einer Abdeckhaube 24 verborgene Vorspanneinrichtung umfasst.

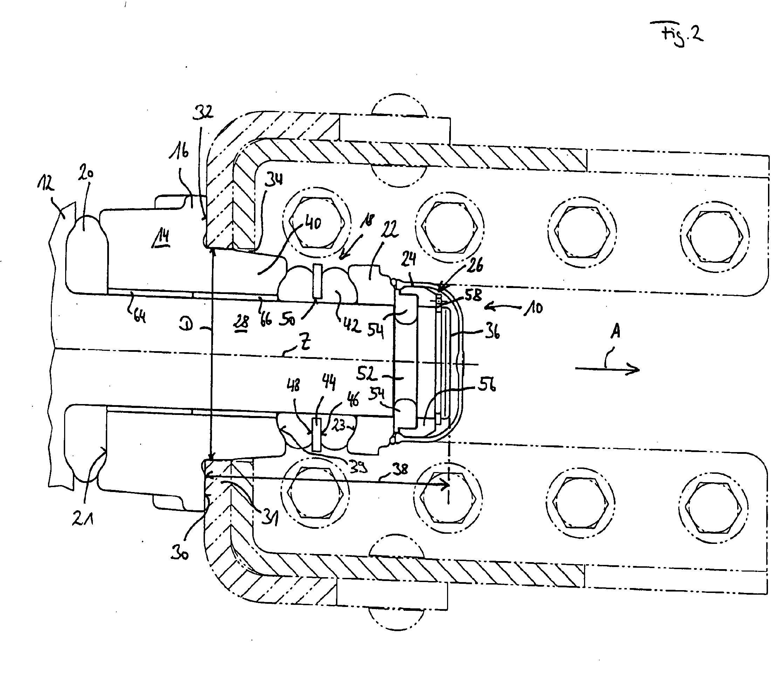

Zur weiteren Beschreibung des zugfahrzeugseitigen Kupplungsteils 10 wird zusätzlich auf Fig. 2 verwiesen. Dort ist die unter der Abdeckhaube 24 aufgenommene Vorspanneinrichtung 26 im Schnitt zu sehen.

Von dem Kupplungskörper 12 steht in Abstehrichtung A eine Zugstange 28 ab, welche sich längs ihrer Zugstangenlängsachse Z erstreckt. Die Zugstangenlängsachse Z ist im dargestellten Beispiel eine Längsmittelachse. Sie definiert eine axiale Richtung und hierzu orthogonale radiale Richtungen.

Der Flanschabschnitt 16 weist eine in Abstehrichtung A weisende Anlagefläche 30 auf, welche an einer Gegenanlagefläche 32 einer Traverse 31 anliegt. Die Traverse 31 ist ein an einem Fahrzeug vorgesehenes Anbringungsbauteil im Sinne der vorliegenden Erfindung zur Anbringung des Kupplungsbauteils 10 daran.

Die Traverse 31 weist außerdem eine Montageöffnung 34 auf, durch welche ein von der Anlagefläche 30 des Flanschabschnitts 16 des Befestigungslagers 14 bis zum freien Längsende 36 der Zugstange 28 reichender Durchsteck-Längsabschnitt 38 der Zugstange 28 hindurch gesteckt ist.

Alle die Zugstange 28 umgebenden Durchsteck-Bauteile des zugfahrzeugseitigen Kupplungsteils 10, d.h. alle zum zugfahrzeugseitigen Kupplungsteil gehörenden Bauteile, welche sich im fertig montierten Zustand der Anhängerkupplung im Durchsteck-Längsabschnitt 38 der Zugstange 28 befinden und von letzterer getragen werden, weisen eine Außenabmessung auf, welche ihre Durchsteckbarkeit in Abstehrichtung A durch die Montageöffnung 34 gewährleistet. Genauer weisen die in den Figuren 1 und 2 gezeigten Durchsteck-Bauteile 18, 22 und 24 (sowie die unter der Abdeckhaube 24 verborgene Axialvorspanneinrichtung 26) jeweils eine im Querschnitt orthogonal zur Zugstangenlängsachse Z kreisförmige Außengeometrie mit einem Durchmesser auf, welcher kleiner ist als der Durchmesser D der Montageöffnung 34. Auch der von der Anlagefläche 30 des Flanschabschnitts 16 ausgehend in Abstehrichtung A zur ersten Federanordnung 18 vorragende Fortsatz 40 des Befestigungslagers 14 ist ein Durchsteck-Bauteil im Sinne der vorliegenden Erfindung.

Für die Funktionalität der hier gezeigten gefederten Anhängerkupplung ist es von besonders großem Vorteil, wenn die erste Federanordnung 18 und die zweite Federanordnung 20 im Wesentlichen gleiche Federcharakteristika aufweisen, d.h. dass etwa einer gleichen Belastung im Wesentlichen der gleiche Federweg in beiden Federanordnungen zugeordnet ist. Die zweite Federanordnung 20, welche im hier gezeigten Beispiel durch einen Elastomerring gebildet ist, ist im Wesentlichen aus dem Stand der Technik bekannt. Aus den radialen Abmessungen des Elastomerrings bezogen auf die Zugstangenlängsachse Z, durch Art und Umfang der Vorspannung (etwa durch ein stärkeres Vorstehen der als Federwiderlager ausgebildeten und entgegen der Abstehrichtung A weisenden Stirnfläche 21 des Befestigungslagers radial weiter außen) sowie durch das zur Herstellung des Elastomerrings der zweiten Federanordnung 20 verwendete Material ist die Federcharakteristik der zweiten Federanordnung 20 im Wesentlichen bestimmt.

Um nun mit der radial kleiner als die zweite Federanordnung 20 bemessenen ersten Federanordnung 18 im Wesentlichen die gleiche Federcharakteristik wie für die zweite Federanordnung 20 zu erhalten, ist die erste Federanordnung 18 in den in den Figuren 1 bis 3 gezeigten Beispielen in bestimmter Weise ausgestaltet: sie weist ein Polymerfederelement 42 auf, welches eine metallische Zwischenscheibe 44, beispielsweise aus Stahl, von drei Seiten her umgibt, und zwar an den in und entgegen der Abstehrichtung A weisenden Stirnflächen 46 und 48 sowie an der radial inneren Mantelfläche 50 der Zwischenscheibe 44. An diesen Flächen ist das Polymerfederelement 42 an die metallische Zwischenscheibe 44 anvulkanisiert, so dass die erste Federanordnung 18 eine kompakte leicht zu montierende Baueinheit bildet.

Durch das Anvulkanisieren von Polymermaterial an der radial inneren Mantelfläche 50 der Zwischenscheibe 44 wird außerdem ein Kontakt zwischen der Zugstange 28 und der metallischen Zwischenscheibe 44 vermieden, so dass es dann, wenn aufgrund der Federung der Anhängerkupplung im Betrieb Relativbewegungen zwischen der Zwischenscheibe 44 und der Zugstange 28 auftreten, kein Abrieb an der Zugstange 28 oder an der Zwischenscheibe 44 auftritt. Dies wirkt sich vorteilhaft auf die Standfestigkeit der hier gezeigten Anhängerkupplung aus.

Das in Abstehrichtung A weisende Längsende (Stirnfläche 39) des Durchsteck-Fortsatzes 40 des Befestigungslagers 14 ist ebenso als Federwiderlager ausgebildet, wie die entgegen der Abstehrichtung A weisende Stirnfläche 23 der Spannscheibe 22. Die zur Anlage an das Polymerfederelement 42 der ersten Federanordnung 18 vorgesehenen Stirnflächen von Durchsteck-Fortsatz 40 und Spannscheibe 22 sind dabei derart ausgeformt, dass sie radial weiter entfernt von der Zugstangenlängsachse Z einen geringeren axialen Abstand aufweisen als in einem radial näher an der Zugstangenlängsachse Z gelegenen Bereich. Dies wirkt sich günstig auf die Vorspannung und infolgedessen auf die Federcharakteristik der ersten Federanordnung 18 aus.

Zur Vermeidung von unerwünscht hohen Spannungen im Polymerfederelement 42 ist der Verlauf der Kontur der zur Anlage an das Polymerfederelement ausgebildeten Stirnflächen bei Betrachtung in einem die Zugstangenlängsachse Z enthaltenden Längsschnitt stetig, d.h. ohne scharfe Kanten, ausgebildet. Es sei darauf hingewiesen, dass in den hier gezeigten Beispielen, wie auch üblicherweise allgemein, die Zugstangenlängsachse Z als Längsmittelachse der Zugstange 28 eine Symmetrieachse der ersten Federanordnung 18 wie auch der anderen Durchsteck-Bauteile bildet.

Die Vorspanneinrichtung 26 ist in an sich bekannter Weise ausgestaltet. Die Spannscheibe 22 wird durch ein Werkzeug entgegen der Abstehrichtung A und entgegen der Wirkung der ersten und der zweiten Federanordnung 18 bzw. 20 zum Kupplungskörper 12 hin bewegt, bis eine Nut 52 so freigegeben ist, dass die Haltesegmente 54 radial in diese Nut eingeschoben werden können. Diese halten dann die Spannscheibe 22 an der in Fig. 2 dargestellten Position. Die Haltesegmente 54 werden wiederum durch eine Verriegelungshülse 56 gegen Herausfallen aus der Nut 52 gesichert. Die Verriegelungshülse 46 wird selbst wieder durch einen Spannring 58 an Ort und Stelle gehalten. Die Vorspannung des zugfahrzeugseitigen Kupplungsteils 10 ist damit bei vorgegebenen Federanordnungen durch die axiale Lage der Nut 52 in der Zugstange 28 definiert.

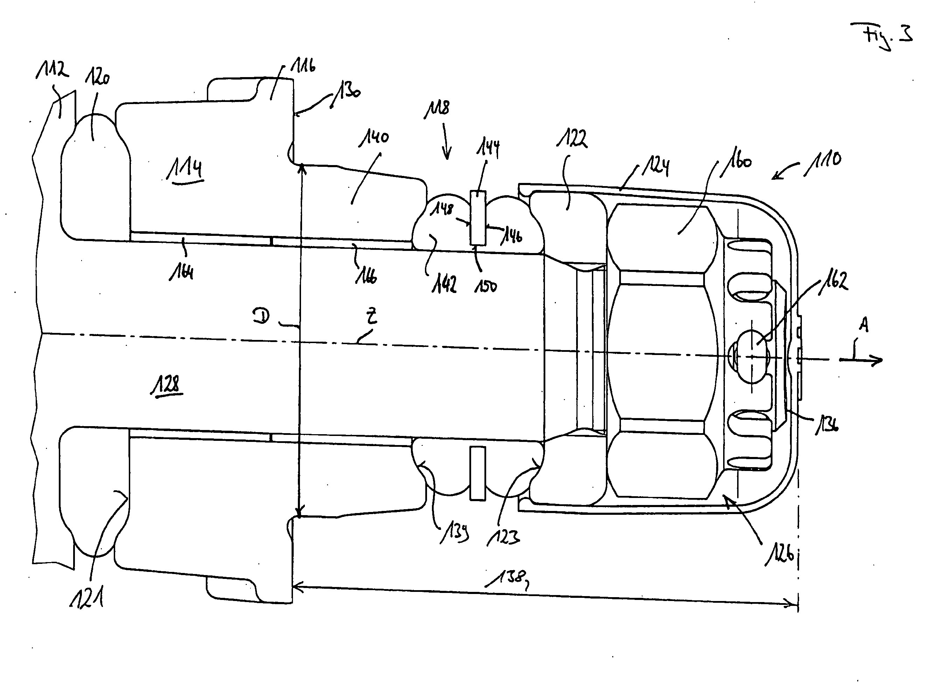

In Fig. 3 ist eine zweite Ausführungsform der in den Figuren 1 und 2 gezeigten erfindungsgemäßen Anhängerkupplung dargestellt. Die in Fig. 3 gezeigte Ausführungsform wird lediglich insofern beschrieben werden, als sie sich von jener der Figuren 1 und 2 unterscheidet. Gleiche oder funktionsgleiche Bauteile wie in den Figuren 1 und 2 sind in Fig. 3 mit gleichen Bezugszeichen versehen, jedoch erhöht um die Zahl 100. Zur Erläuterung dieser Bauteile wird ausdrücklich auf die Beschreibung der Figuren 1 und 2 verwiesen.

Die in Fig. 3 dargestellte zweite Ausführungsform unterscheidet sich von jener der Figuren 1 und 2 lediglich in der Ausgestaltung der Vorspanneinrichtung 126.

Im Gegensatz zu der Ausführungsform der Figuren 1 und 2 ist in der Ausführungsform von Fig. 3 die Spannscheibe 122 durch eine auf das freie Längsende 136 der Zugstange 128 aufgeschraubte Spannmutter 160 in Richtung zum Kupplungskörper 112 hin vorgespannt. Die Spannmutter 160 ist in an sich bekannter Weise durch einen orthogonal zur Zugstangenlängsachse Z in die Zugstange 128 eingeschobenen Verriegelungsstift 162 gegen ein unerwünschtes Lösen gesichert.

Nachzutragen bleibt, dass radial zwischen der Zugstange 28 bzw. 128 und dem Befestigungslager 14 bzw. 114 Ringbuchsen 64 und 66 bzw. 164 und 166 angeordnet sind.

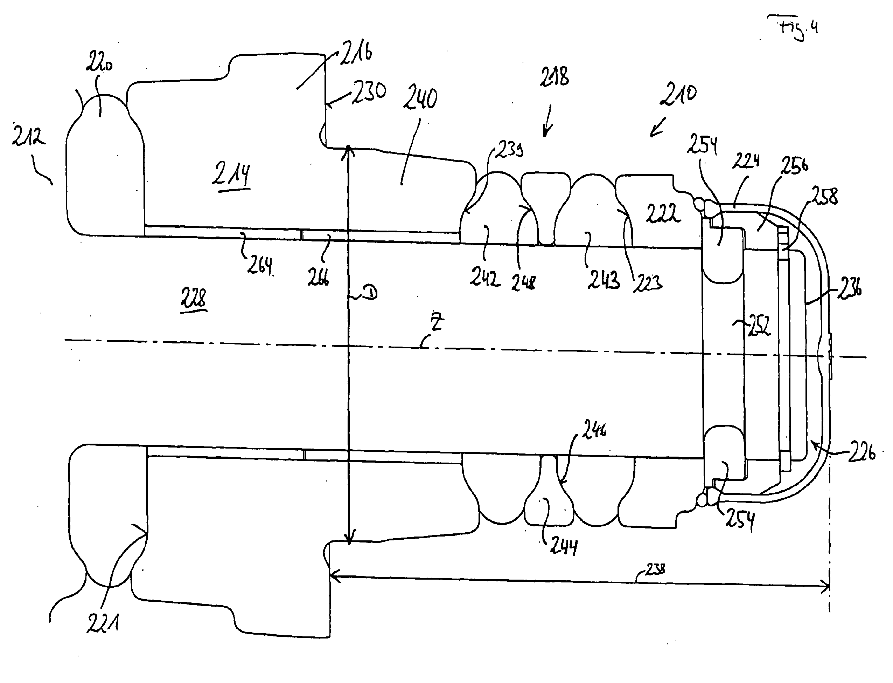

In Fig. 4 ist eine weitere Ausführungsform einer erfindungsgemäßen Anhängerkupplung dargestellt.

Gleiche oder funktionsgleiche Bauteile wie in der in den Figuren 1 und 2 dargestellten Ausführungsform sind in Fig. 4 mit gleichen Bezugszeichen versehen, jedoch erhöht um die Zahl 200. Die Ausführungsform der Fig. 4 wird im Folgenden lediglich insoweit beschrieben werden, als sie sich von der Ausführungsform der Figuren 1 und 2 unterscheidet, auf deren Beschreibung ansonsten ausdrücklich verwiesen wird.

Die Ausführungsform der Fig. 4 unterscheidet sich von jener der Figuren 1 und 2 im Wesentlichen in der Ausgestaltung der ersten Federanordnung 218. Diese umfasst ein erstes Polymerfederelement 242 und ein axial mit Abstand davon vorgesehenes zweites Polymerfederelement 243. Axial zwischen diesen beiden benachbarten Polymerfederelementen 242 und 243 ist eine metallische Zwischenscheibe 244 angeordnet. In dem in Fig. 4 gezeigten Ausführungsbeispiel sind die Polymerfederelemente 242 und 243 sowie die Zwischenscheibe 244 als Durchsteck-Bauteile der ersten Federanordnung 218 voneinander trennbar. Zur Erleichterung der Montage können jedoch die Polymerfederelemente 242 und 243 an die Zwischenscheibe 244 anvulkanisiert sein.

Die Zwischenscheibe 244 entspricht in der Ausgestaltung ihrer zu den Polymerfederelementen 242 und 243 hin weisenden und zur Anlage an diese ausgebildeten Stirnflächen 246 und 248 im Wesentlichen der Ausgestaltung der Federwiderlager des Befestigungslagers 214 bzw. der Spannscheibe 222. Dies bedeutet, die Zwischenscheibe 244 ist derart ausgebildet, dass sie in einem radial weiter von der Zugstangenlängsachse Z entfernt gelegenen Bereich eine stärkere axiale Verformung der Polymerfederelemente 242 und 243 bewirkt als in einem radial näher an der Zugstangenlängsachse Z gelegenen Bereich. Bei einer Betrachtung der Zwischenscheibe 244 im montierten Zustand in einem die eine Rotationssymmetrieachse der ersten Federanordnung 218 bildende Zugstangenlängsachse Z enthaltenden Längsschnitt weist die Zwischenscheibe 244 einen im Wesentlichen T-förmigen Querschnitt auf, wobei zur Vermeidung von scharfen Kanten die Konturen der zur Anlage an den Polymerfederelementen 242 und 243 ausgebildeten Stirnflächen 246 und 248 stetig sind. Durch diese stetige Ausbildung der Stirnflächen 246 und 248 werden unerwünschte Spannungsspitzen vermieden, welche bei Ausbildung von scharfen Kanten an den Stirnflächen 246 und 248 der Zwischenscheibe 244 ansonsten in die Polymerfederelemente 242 oder/und 243 eingeleitet werden könnten.

Es wird weiter darauf hingewiesen, dass die in Fig. 3 gezeigte Vorspanneinrichtung 126 ohne weiteres auch auf die Ausführungsform, wie sie in Fig. 4 dargestellt ist, angewendet werden kann.

## Patentansprüche

1. Anhängerkupplung zur lösbaren Verbindung eines Zugfahrzeuges mit einem Nachlauffahrzeug, umfassend: einen Kupplungskörper (12; 112; 212) mit einer Zugstange (28; 128; 228), welche vom Kupplungskörper (12; 112; 212) in einer Abstehrichtung (A) absteht und sich längs einer Zugstangenlängsachse (Z) erstreckt, die eine axiale Richtung definiert, ferner ein Befestigungslager (14; 114; 214), welches die Zugstange (28; 128; 228) radial außen umgibt, wobei das Befestigungslager (14; 114; 214) einen Flanschabschnitt (16; 116; 216) aufweist mit einer Anlagefläche (30; 130; 230) zur Anlage an eine die Montageöffnung (34) zumindest teilweise umgebende Gegenanlagefläche (32) des Anbringungsbauteils (31), wobei die Anhängerkupplung dadurch als vormontierte Baugruppe in Abstehrichtung (A) in die Montageöffnung (34) einsteckbar ist, dass alle die Zugstange (28; 128; 228) umgebenden Durchsteck-Bauteile (18, 22, 24, 40; 118, 122, 124, 140; 218, 222, 224, 240) in dem von der Anlagefläche (30) des Flanschabschnitts (16; 116; 216) bis zum freien, kupplungskörperfernen Längsende (36; 136; 236) der Zugstange (28; 128; 228) reichenden Durchsteck-Längsabschnitt (38; 138; 238) der Zugstange (28; 128; 228) eine Außengeometrie aufweisen, welche derart bemessen ist, dass die Durchsteck-Bauteile (18, 22, 24, 40; 118, 122, 124, 140; 218, 222, 224, 240) bei der Anbringung der Anhängerkupplung an dem Fahrzeug durch die Montageöffnung (34) durchsteckbar sind, wobei weiter die Zugstange (28; 128; 228) an dem von ihr durchsetzten Befestigungslager (14; 114; 214) unter Federvorspannung festgelegt ist, welche bewirkt wird durch wenigstens eine in Abstehrichtung (A) hinter dem Befestigungslager (14; 114; 214) angeordnete erste Federanordnung (18; 118; 218), wobei die erste Federanordnung (18; 118; 218) durch ein Axialvorspannmittel (26; 126; 226) axial vorgespannt ist, wobei ferner die erste Federanordnung (18; 118; 218) und das Axialvorspannmittel (26; 126; 226) Durchsteck-Bauteile sind,
**dadurch gekennzeichnet, dass** das Befestigungslager im an ein Fahrzeug montierten Zustand eine Montageöffnung (34) eines Anbringungsbauteils (31) des Fahrzeugs durchsetzt und dadurch, dass die Anhängerkupplung wenigstens eine in Abstehrichtung (A) vor dem Befestigungslager (14; 114; 214) angeordnete zweite Federanordnung (20; 120; 220) umfasst, welche axial vorgespannt ist.

2. Anhängerkupplung nach Anspruch 1,
**dadurch gekennzeichnet, dass** die Durchsteck-Bauteile (18, 22, 24, 40; 118, 122, 124, 140; 218, 222, 224, 240) im Wesentlichen eine kreisrunde Außengeometrie aufweisen und die Montageöffnung (34) im Wesentlichen ebenfalls kreisrund ist, so dass der Außendurchmesser der Durchsteck-Bauteile (18, 22, 24, 40; 118, 122, 124, 140; 218, 222, 224, 240) kleiner ist als der Öffnungsdurchmesser (D) der Montageöffnung (34).

3. Anhängerkupplung nach Anspruch 1 oder 2,
**dadurch gekennzeichnet, dass** die Anlagefläche (30; 130; 230) des Befestigungslagers (14; 114; 214) im montierten Zustand der Anhängerkupplung in Abstehrichtung (A) weist.

4. Anhängerkupplung nach einem der vorhergehenden Ansprüche,
**dadurch gekennzeichnet, dass** die erste Federanordnung (18; 118; 218) wenigstens ein die Zugstange (28; 128; 228) umgebendes Polymerfederelement (42; 142; 242, 243), vorzugsweise einen Polymerring (42; 142; 242, 243) umfasst.

5. Anhängerkupplung nach Anspruch 4,
**dadurch gekennzeichnet, dass** sie wenigstens zwei Polymerfederelemente (242, 243) umfasst und in Abstehrichtung (A) zwischen zwei axial benachbarten Polymerfederelementen (242, 243) eine im Verhältnis zu diesen im Wesentlichen starre Zwischenscheibe (244) als weiteres Durchsteck-Bauteil angeordnet ist.

6. Anhängerkupplung nach Anspruch 4 oder 5,
**dadurch gekennzeichnet, dass** wenigstens ein Polymerfederelement (42; 142), im Falle von wenigstens zwei Polymerfederelementen vorzugsweise zwei Polymerfederelemente, an die Zwischenscheibe (44; 144) anvulkanisiert ist beziehungsweise sind.

7. Anhängerkupplung nach einem der Ansprüche 4 oder 6,
**dadurch gekennzeichnet, dass** die erste Federanordnung (18; 118) ein Polymerfederelement (42; 142) umfasst, welches die Zwischenscheibe (44; 144) an wenigstens drei Seiten umgibt.

8. Anhängerkupplung nach Anspruch 7,
**dadurch gekennzeichnet, dass** das Polymerfederelement (42; 142) die Zwischenscheibe (44; 144) in deren in axialer Richtung weisenden Stirnfläche (46, 48; 146, 148) sowie an der radial inneren Mantelfläche (50; 150) berührt.

9. Anhängerkupplung nach einem der Ansprüche 5 bis 8,
**dadurch gekennzeichnet, dass** die Zwischenscheibe (244) radial weiter außen eine größere axiale Dicke aufweist als radial weiter innen.

10. Anhängerkupplung nach Anspruch 9,
**dadurch gekennzeichnet, dass** die Zwischenscheibe (44; 144; 244) rotationssymmetrisch ist und in einem Schnitt mit einer ihre Rotationssymmetrieachse (bei Z) enthaltenden Schnittebene einen T-förmigen Querschnitt aufweist.

11. Anhängerkupplung nach Anspruch 10,
**dadurch gekennzeichnet, dass** die Kontur wenigstens einer in axialer Richtung weisenden Stirnfläche (46, 48; 146, 148; 246, 248) der Zwischenscheibe (44; 144; 244) in dem besagten Schnitt eine stetigen Verlauf hat.

12. Anhängerkupplung nach einem der vorhergehenden Ansprüche,
**dadurch gekennzeichnet, dass** die erste (18; 118; 218) und die zweite Federanordnung (20; 120; 220) jeweils eine Federcharakteristik aufweisen, die sich um nicht mehr als 20%, vorzugsweise um nicht mehr als 10% unterscheiden, besonders bevorzugt im Wesentlichen identisch sind.

13. Anhängerkupplung nach einem der vorhergehenden Ansprüche,
**dadurch gekennzeichnet, dass** die zweite Federanordnung (20; 120; 220) genau ein Polymerfederelement aufweist, insbesondere eines, welches eine radial größere Abmessung aufweist als die erste Federanordnung (18; 118; 218).

14. Anhängerkupplung nach einem der vorhergehenden Ansprüche,
**dadurch gekennzeichnet, dass** eine in Abstehrichtung (A) weisende Fläche (23; 123; 223) des Befestigungslagers (14; 114; 214) als Federwiderlager für die erste Federanordnung (18; 118; 218) ausgebildet ist.

15. Anhängerkupplung nach einem der vorhergehenden Ansprüche,
**dadurch gekennzeichnet, dass** eine entgegen der Abstehrichtung (A) weisende Fläche des Befestigungslagers (14; 114; 214) als Federwiderlager für die zweite Federanordnung (20; 120; 220) ausgebildet ist.

## Claims

1. A trailer coupling for the releasable connection of a towing vehicle to a trailer vehicle, comprising: a coupling body (12;112;212) with a tow bar (28;128;228) which projects from the coupling body (12;112;212) in a projecting direction (A) and extends along a tow bar longitudinal direction (Z) which defines an axial direction, also a mounting bearing (14;114;214) which surrounds the tow bar (28;128;228) radially outwardly, wherein the mounting bearing (14;114;214) has a flange portion (16;116;216) with a contact surface (30;130;230) to be applied against an opposite contact surface (32) of the attachment component (31), wherein the trailer coupling can be inserted into the mounting aperture (34) as a pre-assembled unit in the projecting direction (A) in that all the through-mounting components (18, 22, 24, 40; 118, 122, 124, 140; 218, 224, 240) have in the through-mounting longitudinal portion (38;138;238) of the tow bar (28;128;228) extending up to the free longitudinal end (36;136;236) of the tow bar (28;128;228) an outer geometry which is of such dimensions that the through-mounting components (18,22, 24, 40; 118, 122, 124, 140; 218, 224, 240) can be inserted through the mounting aperture (34) when the trailer coupling is attached to the vehicle, wherein further the tow bar (28;128;228) is located under spring-biasing on the mounting bearing (14;114;214) through which it passes, which is brought about by at least one first spring assembly (18;118;218) arranged behind the mounting bearing (14;114;214) in the projecting direction (A), wherein the first spring assembly (18;118;218) is axially biased by an axial biasing means (26;126;226), wherein further the first spring assembly (18;118;218) and the axial biasing means (26;126;226) are through-mounting components,
**characterised in that**, in a state installed on a vehicle, the mounting bearing passes through a mounting aperture (34) of an attachment component (31) of the vehicle and this because the trailer coupling comprises at least one second spring assembly (20;120;220) which is arranged in front of the mounting bearing (14;114;214) in the projecting direction (A) and which is axially biased.

2. A trailer coupling according to Claim 1, **characterised in that** the through-mounting components (18,22,24,40; 118,122,124,140;218,224,240) have substantially circular outer geometry and the mounting aperture (34) is also substantially circular so that the outer diameter of the through-mounting components (18, 22, 24 ,40; 118, 122, 124, 140; 218, 224, 240) is smaller than the aperture diameter (D) of the mounting aperture (34).

3. A trailer coupling according to Claim 1 or 2, **characterised in that**, in the mounted state of the trailer coupling, the contact surface (30;130;230) of the mounting bearing (14;114;214) points in the projecting direction (A).

4. A trailer coupling according to one of the preceding Claims, **characterised in that** the first spring assembly (18;118;218) comprises at least one polymer spring element (42;142;242,243), preferably a polymer ring (42;142;242,243), surrounding the tow bar (28;128;228).

5. A trailer coupling according to Claim 4, **characterised in that** it comprises at least two polymer spring elements (242,243) and in the projecting direction (A) there is arranged between two axially adjacent polymer spring elements (242,243) an intermediate plate (244), which is substantially rigid in relation to these latter, as a further through-mounting component.

6. A trailer coupling according to Claim 4 or 5, **characterised in that** at least one polymer spring element (42;142), in the case of at least two polymer spring elements, preferably two polymer spring elements, is or are vulcanised on to the intermediate plate (44;144).

7. A trailer coupling according to either Claim 4 or Claim 6, **characterised in that** the first spring assembly (18;118) comprises a polymer spring element (42;142) which surrounds the intermediate plate (44;144) on at least three sides.

8. A trailer coupling according to Claim 7, **characterised in that** the polymer spring element (42;142) contacts the intermediate plate (44;144) at its end face (46,48;146,148) pointing in an axial direction, as well on the radially inner circumferential surface (50;150).

9. A trailer coupling according to any one of Claims 5 to 8, **characterised in that** the intermediate plate (244) is of larger axial thickness radially further outwards than radially further inwards.

10. A trailer coupling according to Claim 9, **characterised in that** the intermediate plate (44;144;244) is rotationally symmetrical and is of T-shaped cross-section in a section with a sectional plane containing its axis of rotational symmetry (at Z).

11. A trailer coupling according to Claim 10, **characterised in that** the contour of at least one end face (46,48;146,148;246,248) of the intermediate plate (44;144;244) pointing in an axial direction has a constant course in the aforementioned section.

12. A trailer coupling according to any one of the preceding Claims, **characterised in that** the first spring assembly (18;118;228) and the second spring assembly (20;120;220) each have a spring characteristic which differs by not more than 20 %, preferably by not more than 10 %, especially preferably are substantially are identical.

13. A trailer coupling according to any one of the preceding Claims, **characterised in that** the second spring assembly (20;120;220) has precisely one polymer spring element, in particular one which is of radially larger dimensions than the first spring assembly (18; 118; 228).

14. A trailer coupling according to any one of the preceding Claims, **characterised in that** a surface (23;123;223) of the mounting bearing (14;114;214) pointing in the projecting direction (A) is in the form of a spring abutment for the first spring assembly (18; 118; 228).

15. A trailer coupling according to any one of the preceding Claims, **characterised in that** a surface of the mounting bearing (14;114;214) pointing counter to the projecting direction (A) is in the form of a spring abutment for the second spring assembly (20;120;220).

## Revendications

1. Attelage pour la liaison amovible d'un véhicule tracteur avec un véhicule de poursuite, comprenant : un corps d'attelage (12 ; 112 ; 212) avec une barre de traction (28 ; 128 ; 228) qui s'éloigne du corps d'attelage (12 ; 112 ; 212) dans un sens d'éloignement (A) et s'étend le long d'un axe longitudinal de barre de traction (Z) qui définit un sens axial, de plus un palier de fixation (14 ; 114 ; 214) qui entoure radialement à l'extérieur la barre de traction (28 ; 128 ; 228), le palier de fixation (14 ; 114 ; 214) présentant une section de bride (16 ; 116 ; 216) avec une surface d'appui (30 ; 130 ; 230) pour l'appui contre une surface d'appui antagoniste (32), entourant au moins en partie l'ouverture de montage (34), du composant de montage (31), l'attelage pouvant être enfiché comme un bloc prémonté dans le sens d'éloignement (A) dans l'ouverture de montage (34) du fait que tous les composants traversants (18, 22, 24, 40 ; 118, 122, 124, 140 ; 218, 222, 224, 240) entourant la barre de traction (28 ; 128 ; 228) présentent dans la section longitudinale traversante (38 ; 138 ; 238) de la barre de traction (28 ; 128 ; 228) allant de la surface d'appui (30) de la section de bride (16 ; 116 ; 216) jusqu'à l'extrémité longitudinale (36 ; 136 ; 236) libre, éloignée du corps d'attelage, de la barre de traction (28 ; 128 ; 228), une géométrie extérieure qui est dimensionnée de sorte que les composants traversants (18, 22, 24, 40 ; 118, 122, 124, 140 ; 218, 222, 224, 240) puissent être insérés dans l'ouverture de montage (34) lors du montage de l'attelage sur le véhicule, la barre de traction (28 ; 128 ; 228) étant en outre fixée sur le palier de fixation qu'elle traverse (14 ; 114 ; 214) sous précontrainte de ressort qui est provoquée par au moins un premier ensemble de ressort (18 ; 118 ; 218) disposé dans le sens d'éloignement (A) derrière le palier de fixation (14 ; 114 ; 214), le premier ensemble de ressort (18 ; 118 ; 218) étant précontraint axialement par un moyen de précontrainte axiale (26 ; 126 ; 226), le premier ensemble de ressort (18 ; 118 ; 218) et le moyen de précontrainte axiale (26 ; 126 ; 226) étant de plus des composants traversants,
**caractérisé en ce que** le palier de fixation traverse, à l'état monté sur un véhicule, une ouverture de montage (34) d'un composant de montage (31) du véhicule et **en ce que** l'attelage comporte au moins un second ensemble de ressort (20 ; 120 ; 220) disposé dans le sens d'éloignement (A) devant le palier de fixation (14 ; 114 ; 214) et précontraint axialement.

2. Attelage selon la revendication 1, **caractérisé en ce que** les composants traversants (18, 22, 24, 40 ; 118, 122, 124, 140 ; 218, 222, 224, 240) présentent sensiblement une géométrie extérieure circulaire et **en ce que** l'ouverture de montage (34) est aussi sensiblement circulaire de sorte que le diamètre extérieur des composants traversants (18, 22, 24, 40 ; 118, 122, 124, 140 ; 218, 222, 224, 240) soit inférieur au diamètre d'ouverture (D) de l'ouverture de montage (34).

3. Attelage selon la revendication 1 ou 2, **caractérisé en ce que** la surface d'appui (30 ; 130 ; 230) du palier de fixation (14 ; 114 ; 214) est tournée à l'état monté de l'attelage dans le sens d'éloignement (A).

4. Attelage selon l'une quelconque des revendications précédentes, **caractérisé en ce que** le premier ensemble de ressort (18 ; 118 ; 218) comporte au moins un élément de ressort en polymère (42 ; 142 ; 242, 243) entourant la barre de traction (28 ; 128 ; 228), de préférence un anneau en polymère (42 ; 142 ; 242, 243).

5. Attelage selon la revendication 4, **caractérisé en ce qu'**il comporte au moins deux éléments de ressort en polymère (242, 243) et **en ce qu'**un disque intermédiaire (244) sensiblement rigide par rapport à ceux-ci est disposé comme autre composant traversant dans le sens d'éloignement (A) entre deux éléments de ressort en polymère (242, 243) axialement contigus.

6. Attelage selon la revendication 4 ou 5, **caractérisé en ce qu'**au moins un élément de ressort en polymère (42; 142), dans le cas d'au moins deux éléments de ressort en polymère, de préférence deux éléments de ressort en polymère est ou sont vulcanisés sur le disque intermédiaire (44 ; 144).

7. Attelage selon l'une quelconque des revendications 4 ou 6, **caractérisé en ce que** le premier ensemble de ressort (18 ; 118) comporte un élément de ressort en polymère (42 ; 142) entourant le disque intermédiaire (44 ; 144) sur au moins trois côtés.

8. Attelage selon la revendication 7, **caractérisé en ce que** l'élément de ressort en polymère (42 ; 142) touche le disque intermédiaire (44 ; 144) dans sa surface frontale (46, 48 ; 146, 148) tournée dans le sens axial ainsi que sur la surface enveloppe (50 ; 150) radialement intérieure.

9. Attelage selon l'une quelconque des revendications 5 à 8, **caractérisé en ce que** le disque intermédiaire (244) présente dans le sens radial plus vers l'extérieur, une épaisseur axiale plus grande que dans le sens radial plus vers l'intérieur.

10. Attelage selon la revendication 9, **caractérisé en ce que** le disque intermédiaire (44 ; 144 ; 244) est doté d'une symétrie de rotation et présente une section en forme de T dans une coupe dotée d'un plan de coupe contenant son axe de symétrie de rotation (pour Z).

11. Attelage selon la revendication 10, **caractérisé en ce que** le contour d'au moins une surface frontale (46, 48 ; 146, 148 ; 246, 248), tournée dans le sens axial, du disque intermédiaire (44 ; 144 ; 244) présente un développement continu dans ladite coupe.

12. Attelage selon l'une quelconque des revendications précédentes, **caractérisé en ce que** le premier (18 ; 118 ; 218) et le second ensemble de ressort (20 ; 120 ; 220) présentent chacun une caractéristique élastique, les deux caractéristiques se distinguant de moins de 20 %, de préférence de moins de 10 %, de manière particulièrement préférée étant sensiblement identiques.

13. Attelage selon l'une quelconque des revendications précédentes, **caractérisé en ce que** le second ensemble de ressort (20 ; 120 ; 220) présente précisément un élément de ressort en polymère, en particulier un élément qui présente une dimension plus grande dans le sens radial que le premier ensemble de ressort (18 ; 118 ; 218).

14. Attelage selon l'une quelconque des revendications précédentes, **caractérisé en ce qu'**une surface (23 ; 123 ; 223), tournée dans le sens d'éloignement (A), du palier de fixation (14 ; 114 ; 214) est réalisée comme une butée de ressort pour le premier ensemble de ressort (18 ; 118 ; 218).

15. Attelage selon l'une quelconque des revendications précédentes, **caractérisé en ce qu'**une surface tournée dans le sens contraire au sens d'éloignement (A) du palier de fixation (14 ; 114 ; 214) est réalisée comme une butée de ressort pour le second ensemble de ressort (20 ; 120 ; 220).
